# EUROPEAN PATENT SPECIFICATION

(11) **EP 3 348 725 B1**
(45) Date of publication and mention of the grant of the patent: **18.03.2020**
(21) Application number: 17151439.1
(22) Date of filing: 13.01.2017
(51) Int. Cl.: E04B 1/76, F16B 13/04, E04F 13/04, F16B 13/00, F16B 5/02

(54) **INSULATION SYSTEM WITH INSULATING ELEMENTS OF GLASS WOOL AND METHOD FOR SPACED FIXATION THEREOF**
DÄMMSYSTEM MIT DÄMMELEMENTEN AUS GLASWOLLE UND VERFAHREN ZUR BEABSTANDETEN BEFESTIGUNG DER DÄMMELEMENTE.
SYSTÈME D'ISOLATION COMPRENANT DES ÉLÉMENTS D'ISOLATION DE LA LAINE DE VERRE ET PROCÉDÉ AMÉLIORÉ DE FIXATION ESPACÉE DES ÉLÉMENTS D'ISOLATION

(43) Date of publication of application: 18.07.2018
(73) Proprietor: URSA Insulation, S.A., 28004 Madrid (ES)
(72) Inventor: HIJÓN, Miguel Ángel Torrijos, 28007 Madrid (ES); PÉREZ-FOULLERAT, David, 28850 Torrejón de Ardoz, Madrid (ES); DOMÍNGUEZ, Arturo Luís Casado, 28860 Paracuellos del Jarama, Madrid (ES)
(74) Representative: Zimmermann & Partner Patentanwälte mbB

(56) References cited:
- EP-A1- 3 318 685
- EP-A2- 2 436 851
- DE-A1- 3 418 028
- DE-U1- 20 011 162
- DE-U1-202012 003 017
- US-A1- 2014 318 068

## Description

### Field of the invention

The invention relates to an insulation system for a structural element of a building, such as a wall, a roof or the like, preferably a building façade, with an insulating element comprising glass wool and a spacer fastening device. Another aspect of the present invention relates to a method for spaced fixation of an insulation element comprising glass wool to a structural element of a building using a spacer fastening device.

### Background

The façades of buildings are recurrently thermally and acoustically insulated by applying insulating elements externally to the structural elements. For this purpose, the use of generically called "External Thermal Insulation Composite Systems" (abbreviated as ETICS) is nowadays well established. The ETICS commonly comprise a layer of insulation elements (e.g. panels) arranged externally on the surface of a structural element (e.g. the façade), fastening devices erecting through the thickness of the insulation elements and fixed to the structural element, a rendering coating (e.g. mesh reinforced mortar) applied to the external surface of the insulation elements, and optionally a finishing layer (e.g. dyed mortar), acting as an aesthetic and/or protective layer for the outer surface of the system. Frequently, during installation, a bonding agent is also applied to the insulation elements for adhering them to the surface of the structural element. DE 34 18 028 A1 describes a fastening device for fastening panel-shaped insulation elements comprising glass wool, with the features of the preamble of claim 1.

The insulation elements in these insulation systems are usually formed by panels made of polymer foam (expanded polystyrene EPS, extruded polystyrene XPS, polyurethane), of fibrous insulating materials (glass wool, stone wool, wood or lignocellulose wool), or other more complex composite materials. As a result of the mechanical stresses to which the insulation elements are subjected to in this type of application, like the compression forces applied during application of the rendering, impacts, or the pulling force caused by the wind suction or the own weight of the system, the insulation elements are required to have high mechanical robustness and resistance against compression and tearing forces, particularly in the direction of the thickness of the insulation elements.

The use of insulation materials comprising glass wool in ETICS presents therefore certain challenges. Due to the usually less packed fiber structure of these materials, and lower achievable maximum density, limited by its production method, glass wool materials are normally more compressible and flexible, and they have a much higher tendency to disaggregation of the fibrous matrix than other fibrous insulation materials, such as stone wool or wood fiber insulation, resulting in a lower resistance against piercing or tearing in the direction of their thickness (perpendicular to the major surfaces). Despite this, there is an interest on using glass wool materials as insulation in ETICS, since in general they offer an improved thermal and/or acoustical insulation for the same thickness or weight of the insulation element, when compared with materials such as stone wool, slag wool, or wood fiber insulation.

In addition, ETICS comprising insulation elements with layers of different rigidity have been described as advantageous, particularly comprising of mineral wool or wood wool insulation. In these systems, a softer, more flexible layer is arranged closer to the structural element, referred to as the internal layer. A harder, more rigid layer is located further away from the structural element, referred to as the external layer. Spacer fastening devices are also described, which extend through the internal and external layers in the insulation element and fix them firmly to the structural element. Among other advantages, in these configurations, the harder layer serves as resilient base for the rendering coating and it is able to withstand mechanical stresses applied to the insulation element. The softer layer reduces the weight of the insulation element, contributes to an improved thermal insulation capacity, and being more flexible, it is capable of adapting itself better to contours and irregularities which might be present in the surface of the structural element. Often, in this type of systems, the surface of the structural element does not need to be extensively prepared before the insulation elements are arranged on to it, such as by application of a rendering layer to smoothen and eliminate unevenness or irregularities. The application of binding agent, e.g. bonding mortar, for bonding the insulation elements to the structural element can be omitted by the use of this type of systems, and with it also the need of applying a primer for improving adhesion of the binding agent to the surface of the structural element. External insulation systems comprising multilayer insulation elements of this type, as well as spacer fastening devices useful in these systems, are described in the patent applications EP 2215317 B1, EP 2216454 A2, WO 2014090707 A1 and EP 2666919 A2.

The patent publications EP 2215317 B1 and EP 2216454 A2 are related in that the first one describes a spacer fastening device which is described in the latter as suitable for fixation of multilayer insulation panels, preferably of wood wool. The density of the external layer is between 180 kg/m³ and 280 kg/m³. The fixation comprises a hollow shank with a fastening screw received in its cavity, together with a non-backward-movement device for the fastening screw. The hollow shank has anchors for the insulation on its outside, in the form of barbed hooks. The space between the outer surface of the insulation panel and the structural building element can be adjusted by screwing-in or screwing-out the fastening screw from the hole drilled in the structural element, or in other words, by adjusting the length of the fastening screw remaining inserted in that hole. This way of adjusting the distance has several downsides, however. For instance, the installer does not know whether the screw remains sufficiently inserted into the hole to assure fixation or not, when adjusting the distance.

Patent publication EP 2666919 A2 describes a fastening device for fixation of double layer wood fiber insulation panels. The fastening device comprises a hollow shank and a fastening screw received in its cavity. The hollow shank has a spiral thread on its outside, for anchoring with the external layer. In a preferred case, the distance of the outer surface of the insulation panel to the structural element is defined by providing a hollow cylinder of a preset length coupled with the shank and surrounding the screw. This method of adjusting the distance has obvious limitations, such as the adjustment being restricted solely to the length of the hollow cylinder.

Finally, WO 2014/090707 A1 describes double layer insulation materials, comprising a compressible internal layer and an incompressible external layer. The incompressible layer might comprise a large list of materials, among others also mineral wool, notably stone wool, with a density of at least 80 kg/m³, but preferably of at least 120 kg/m³. The majority of the mineral wool fibers in the incompressible layer are said to have an orientation substantially perpendicular to the major surfaces of the mineral wool. A shank is pre-installed, preferably factory assembled, along a pre-drilled hole in the panel, entirely within the body of the incompressible external layer. The shank has an external screw thread to advance it and secure it in its desired position. A fixation screw having a circular stop spaced from the screw head is received in a cavity of the shank, which is retained in a stop zone of the shank. A laser receiver is located in a screw driver to detect a laser beam used to adjust the desired distance of the external surface of the insulation panel to the structural element. This method for adjustment of the distance has a significant complexity, which limits its application only to specific situations.

There is a desire for an insulation system which would allow the use of insulation elements comprising glass wool.

In the other hand, there is also a desire for a quick and straightforward method for fixation of insulation elements comprising glass wool, incorporating a spacer fastener, which does not suffer from the drawbacks and limitations of the methods known in the art.

### Description of the invention

The invention relates to an improved insulation system with the features of claim 1 for a structural element of a building or the like, comprising an insulation element and a spacer fastening device, which overcomes the problems and limitations of similar systems known in the art.

The invention is particularly useful for externally insulated walls or roofs of buildings, such as façades, flat or pitched roofs. Because of this fact, through this description and for clarity purposes, sometimes relative wording is used, such as exterior, external, outer, inner, interior or internal. It should be understood that this wording relates to the general intended location relative to the building.

It is another aim of the invention to provide a method for spaced fixation of an insulation element comprising glass wool to a structural element according to claim 12, which is fast and straightforward, and which overcomes the problems and limitations of the methods known in the art.

### Insulation system

In a first aspect of the invention, it is proposed an insulation system for a structural element of a building, such as a wall or a roof, comprising: i) an insulation element comprising glass wool and ii) a spacer fastening device for fastening the insulation element to the structural element. The spacer fastening device comprises a) a hollow shank with first means for engagement with the insulation element and b) an elongated shaft received in the cavity of the hollow shank and comprising a first threaded region. The spacer fastening device is characterized in that it further comprises c) an adjusting element having second means for engagement with the first threaded region of the shaft, the second engagement means allowing rotation of the adjusting element relative to the shaft to produce a displacement of the adjusting element along the axial direction of the shaft; and the adjusting element and the hollow shank being locked against relative movement in the axial direction of the shaft, while being rotatable relative to each other.

### Structural element

The structural element to be insulated with the insulation system of the invention comprises preferably a wooden, masonry or concrete structure of the type used in the construction of walls, façades, floors, ceilings, roofs and the like of buildings. Generally, the first side of the structural element corresponds to the side that faces the interior of the building, while the second side, usually essentially parallel to the first side, corresponds to the side of the structural element facing away from the interior of the building.

### Spacer fastening device

The adjusting element of the spacer fastening device comprises second means for engagement with the first threaded region of the elongated shaft. Preferably, these second means for engagement comprise a threaded region, which will be referred to as third threaded region, provided in the adjusting element, for example as an internal thread, which is configured to be complementary with the first threaded region of the shaft. Preferably, both the third threaded region in the adjusting element and the first threaded region in the elongated shaft, have the same or substantially the same thread pitch distance. In this configuration, when engaged, the rotation of the adjusting element relative to the elongated shaft results in a displacement of the adjusting element along the axis of the shaft, in one or the opposite direction, depending on the direction of the rotation. When the adjusting element is not rotated, the relative positions of the adjusting element and the elongated shaft are locked in the axial direction of the shaft.

The second means for engagement, i.e. the third treaded region, of the adjusting element might preferably be provided at the factory, before the spacer fastening device is assembled, or alternatively, it might be created during the spacer fastening device assembly itself or during installation of the insulation system. So, in an example of the latter, during assembly of the spacer fastening device, the elongated shaft can be inserted by rotation into the adjusting element, so that the first threaded region acts as a tap and threads the third treaded region in the adjusting element by cutting.

The adjusting element may favorably be reachable for an operator from the side more distal from the structural element when installed. The adjusting element might comprise third means for engagement with a driving tool on its end more distal from the structural element, such as a socket, slots or the like. The driving tool can be engaged with the third means for engagement in order to produce the rotation of the adjusting element.

According to the first aspect of the invention, the hollow shank and the adjusting element are locked against movement relative to each other in the axial direction of the elongated shaft, while being rotatable relative to each other. The adjusting element is preferably received in the cavity of the hollow shank. In variations from this, the adjusting element might also be located outside the cavity of the hollow shank.

Preferably, the adjusting element comprises a hollow cylindrical body, extending along at least part of the length of the hollow shank, with a cavity where the end of the elongated shaft, intended to rest most distal from the structural element, is received. The cavity of the adjusting element is preferably further provided with a narrowing or neck, with diameter smaller than the diameter of cavity. This narrowing is preferably configured with the second means for engagement with the first threaded region of the elongated shaft.

The hollow shank in preferred embodiments comprises a retaining plate for the insulation element, configured to rest on the surface of the insulation element most distal from the structural element. Preferably, the retaining plate is round and has a diameter of at least 50 mm, more preferably of at least 70 mm, and most preferably of at least 80 mm. Also preferably, the retaining plate comprises at least one opening or perforation through its thickness. And more preferably, the at least one perforation or opening is configured to allow engagement with a driving tool, which can be used to produce rotation of the hollow shank.

The hollow shank has first means for engagement with the insulation element. These first means for engagement, in preferred embodiments, comprise anchors in form of protrusions extending out from the body of the hollow shank into the insulation element. In more preferred embodiments, the first means for engagement with the insulation element comprise a helical thread running around and along at least part of the length of the body of the hollow shank. The helical thread might be a continuous thread, or it might be discontinuous, separated in helical sectors. The maximum major diameter of the helical thread is preferably at least 50 mm, more preferably at least 70 mm, and most preferably of at least 80 mm. The body of the hollow shank is preferably cylindrical or conical, with a maximum external diameter of at most 30 mm, more preferably of at most 20 mm. In preferred embodiments, the number of full turns of the helical thread is less than 3, more preferably less than 2 full turns. Preferably, in order to facilitate the introduction of the helical thread into the insulation element, the helical thread might have a conical shape, with a major diameter decreasing in the direction approaching the structural element.

In preferred embodiments, the elongated shaft comprises a second threaded region on its end most distal from the hollow shank, to be inserted into the structural element. Thus, in this case, the shaft is configured as a screw with two threaded regions. The two threaded regions might have the same or different pitch, or same or different pitch diameter. Also, the two threaded regions might be separated by a non-threaded region, or might form a continuous thread along the axis of the elongated screw.

In further preferred embodiments, the elongated shaft comprises a head at its end more distal from the structural element. In these embodiments, the head may be provided with fourth means for engagement with a screw driver for rotation, such as slots, sockets or the like.

The spacer fastening device preferably further comprises an expanding dowel which partially encloses the elongated shaft. The expanding dowel is designed with one end region (a first end region) to be inserted into the structural element, which during installation is expanded by the elongated shaft to assure the fixation. In even more preferred embodiments, the expanding dowel also encloses part of the hollow shank as to avoid that a portion of the elongated shaft is unprotected by the dowel and exposed to corroding environment when the spacer fastening device has been installed and the adjusting element has been rotated. In favorable embodiments of the insulation system, the expanding dowel covers at least 2 mm of the length of the hollow shank when installed. In other words, the expanding dowel can comprise a second end region (a distal end portion) which partially surrounds the hollow shank. The second end region has a diameter which is larger than a diameter of an intermediate region. The intermediate region is between the first and second end region. The inner diameter of the second end region can be adapted to allow a sliding movement of the hollow shank relative to the second end region.

### Insulation element

The insulation element of the insulation system comprises glass wool, more preferably laminar glass wool. Preferably, the insulation element is shaped as a panel (or slab), with two larger surfaces and four smaller lateral surfaces. The insulation elements comprising glass wool have preferably a total thickness of 60 - 220 mm, more preferably of 80 - 200 mm. The length of the insulation elements preferably ranges from 60 - 150 cm and the width from 30 - 120 cm.

The glass wool comprised in the insulation element is preferably characterized by having a composition of glass fibers with weight ratio of compounds having alkali metals (i.e. K₂O, Na₂O) relative to compounds having alkaline earth metals (i.e. MgO, CaO) higher than 1. Also preferably, the glass composition of the fibers in the glass wool is characterized by having less than 10 wt.-% of Al₂O₃, more preferably less than 6 wt.-%.

In certain embodiments, the glass wool comprised in the insulation element comprises from 0.05 - 2 wt.-% of silicone, related to the total weight of the glass fibers. The average water absorption of the glass wool preferably does not exceed 1.0 kg/m² after 4 hours when measured according to DIN 18165:1991 Part 1.

The glass wool comprised in the insulation element preferably comprises from 0.01-5 wt.-% related to the weight of the glass fibers of dust-suppressant agent, more preferably an oil, most preferably a mineral oil.

The glass wool comprised in the insulation element preferably comprises from 0.01-2 wt.-% related to the weight of the glass fibers of a silane, preferably an epoxysilane or an aminosilane.

The glass wool comprised in the insulation element preferably comprises glass fibers and an organic binder. The amount of glass fibers is at least 85 wt.-%, preferably at least 90 wt-%, related to the sum of the weights of the glass fibers and organic binder. The glass fibers in the glass wool have preferably an average fiber diameter of 2 - 8 micrometers.

The insulation element comprising glass wool preferably comprises internal and external layers, each with a thickness smaller than the thickness of the insulation element, the external layer being more rigid than the internal layer. The internal layer is more proximal, whereas the external layer is more distal, to the structural element. In certain embodiments, the internal layer, the external layer, or both, comprise glass wool, more preferably laminar glass wool.

The internal layer and the external layer are preferably distinct. In other words, both layers have different compositions and/or properties, and a boundary exists between them. The external and internal layers are preferably manufactured separately from each other.

In the embodiments where the insulating element comprises an external and an internal layer, preferably, the internal and external layers are laminated by being bonded to each other by an adhesive applied to their facing surfaces. The adhesives used might be reactive (one or two component) polyurethane, polyolefin hotmelt or other adhesives, applied by any suitable method known in the art. Alternatively, the internal and external layers might be joined by application of a layer of thermoplastic film or non-woven (e.g. non-woven polyamide) between them, which is molten before the layers are contacted and cooled down after the joining to achieve their bonding.

In embodiments, the external layer thickness is less than 50% of the thickness of the insulation element, and preferably less than 40%. It is preferred that the thickness of the external layer is enough to avoid excessive bending when pulling or compression loads are applied to the insulation element during installation or use of the insulation system. The thickness of the external layer is at least 15 mm, more preferably at least 20 mm and even more preferred at least 25 mm. The thickness of the internal layer might be in the range 10 to 200 mm, preferably from 30 - 150 mm and more preferably from 40 - 100 mm, depending on the application.

In the embodiments, where the insulation element comprises internal and external layers, the external layer being more rigid than the internal layer, the external layer preferably comprises glass wool, more preferably laminar glass wool. The content of glass wool in the external layer is preferably at least 90 wt.-%, more preferably at least 95 wt.-%. The density of the external layer is preferably lower than 140 kg/m³, preferably equal or lower than 120 kg/m³ and preferably equal or higher than 60 kg/m³, and more preferably in the range 100 - 60 kg/m³. The thickness of the external layer is preferably at least 15 mm, more preferably at least 25 mm.

Preferably, the external layer has a compressive stress at 10% deformation, measured according UNE EN 826:2013, of at least 3 times, preferably at least 4 times, higher than the compressive stress at 10% deformation of the internal layer. Also preferably, the external layer has a compressive stress at 10% deformation lower than 15 kPa or lower than 10 kPa, more preferably of 5 - 1 kPa.

The insulating material of the external layer preferably comprises glass wool, wherein the glass fibers are bonded with a cured organic binder. The glass wool comprising the glass fibers and the binder preferably accounts for at least 90 wt.-% of the external layer, the remaining percentage possibly being other insulating materials, reinforcing layers or others. The binder content of the glass wool is suitably higher than 5 wt.-%, and preferably it ranges from 6 - 15 wt.-% in relation to the weight of the glass fibers.

In certain embodiments, where the insulation element comprises internal and external layers, the internal layer comprises glass wool. The content of glass wool in the internal layer is preferably at least 90 wt.-%, more preferably at least 95 wt.-%, the remaining percentage possibly being other insulating materials, reinforcing layers or others. According to these embodiments, the internal layer has a density lower than 60 kg/m³, preferably lower than 45 kg/m³ and more preferably lower than 35 kg/m³. The orientation of the fibers in the glass wool of the internal layer might preferably be laminar, not having been subjected to any process to enhance the fiber orientation in the direction of the thickness of the internal layer.

In certain embodiments of the insulating element where both external layer and internal layer comprise glass wool, it is preferred that the external layer has a higher density than the internal layer, more preferably the density of the external layer is at least 1.5 times higher than the density of the internal layer. The glass wool comprised in both internal and external layer might suitably have a laminar configuration of the glass fibers. More preferably, the external layer comprises at least 90 wt.-% of glass wool with a density in the range 100 - 70 kg/m³ and a laminar orientation of the glass fibers. In these embodiments, the internal layer comprises at least 90 wt.-% glass wool, with a density in the range 20 - 45 kg/m³ and a laminar orientation of the glass fibers.

The insulation element preferably also comprises a reinforcing web either on or at its major surface more proximal to the structural element, or on or at its major surface more distal to the structural element. Also preferably, the reinforcing web is present in or on or at both larger surfaces. The reinforcing web acts as a distribution layer for loads applied to the insulation element during use of insulated building structure system, such as those caused by wind suction or compression. Those loads are concentrated in the areas of the insulation element close to the spacer fastening device. The reinforcing web distributes this load through a larger area, thus, increasing the resistance of the insulation element against mechanical tensioning. In the cases where the reinforcing web is arranged on the major surface of the insulation element more distal from the structural element, rendering material can be coated onto this external layer easier and more homogeneously than when it is coated directly to the more porous and irregular insulating material. In the cases where the insulation element comprises internal and external layers, the reinforcing web might also be provided between the two layers.

The reinforcing web can be any web of sufficient mechanical resistance to dimensional change. It is preferred that it has a porous open structure, more preferably a fabric or nonwoven structure of fibers. The reinforcing web is preferably a glass fiber textile or non-woven. Glass fiber veils made out of glass fibers laid down randomly and bonded with a binder have shown to be suitable. Reinforcing filaments might be incorporated into the web structure to increase dimensional stability. The thickness of the reinforcing web ranges preferably from 100 to 1000 micrometers, more preferably from 200 - 700 micrometers, and the weight per surface area from 20 - 150 g/m², more preferably from 30 - 100 g/m². This reinforcing web is preferably directly laminated to the insulation element by any conventional method.

In certain embodiments, the insulation element is comprised of at least 90 wt.-% of glass wool, more preferably of at least 95 wt.-% of glass wool.

In preferred embodiments, the insulation element does not comprise in an amount higher than 5 wt.-%, more preferably in an amount higher than 2 wt.-%, fibrous insulating materials different than glass wool, such as stone wool, wood fiber insulation, slag wool, or others.

In preferred embodiments, the insulation element does not comprise any layer with a fibrous insulating material with a density equal or higher than 140 kg/m³.

In preferred embodiments of the insulation system, the insulation element is arranged proximal to the second side of the structural element without intermediation of any organic or inorganic binding agent such as mortar, cement and the like. In other words, the insulation element is preferably arranged directly against the second side of the structural element and directly contacting it at least partially.

The insulation system might comprise further elements. In embodiments, a rendering coating (e.g. mortar) is applied to the second major surface of the insulation element, also covering with rendering material the spacer fastening device and its optional retaining plate. A reinforcing grid might be incorporated or embedded into the rendering coating layer, to enhance its resistance to mechanical stresses. Optionally, the rendering coating layer is covered by additional layers to improve the weathering resistance and/or the appearance of the system, such as finishing colored mortar, paints, and the like.

The system according to the embodiments comprises at least one insulation element and one spacer fastening device. In preferred embodiments, the system comprises a plurality of insulation elements arranged side-by-side with abutting lateral sides covering at least partially the second side of the structural element. More preferably, the whole second side of the structural element is covered by one or more insulation elements according to embodiments. Each of the insulation elements is itself fastened to the structural element preferably by a plurality of spacer fastening devices according to certain embodiments, preferably by at least 3 spacer fastening devices, more preferably by at least 5 spacer fastening devices. The number of spacer fastening devices might range from 1 to 12 spacer fastening devices per square meter of the layer of insulation elements, preferably from 1 to 8. Suitably, the spacer fastening devices are located one approximately at the center of the second major surface of the insulation element, and additional ones in the proximity of the corners or the insulation elements, although other arrangements are possible.

In additional embodiments of the system, self-adhesive tapes might be applied to the abutting edges of at least some neighboring insulation elements, bridging the space left between the juxtaposed lateral sides of those elements. Preferably, self-adhesive tapes are applied bridging all the abutting edges of all neighboring insulation elements. The adhesive tapes are adhered to the surfaces of the insulation elements most distal from the structural element, this is, to their second major surfaces, to the edge areas of those neighboring insulation elements. The tapes are selected to provide sufficient adhesion to the surface of the insulation element, and having a carrier for the adhesive compatible with the mortar coating. Preferably, the adhesive carrier of the tapes is selected to have an open structure to improve the bonding strength of the mortar layer to it. In preferred embodiments, the adhesive carrier is an open mesh or veil of glass fibers. The adhesive tapes are useful to avoid penetration of rendering material in the space between neighboring insulation elements during application of the rendering coating, what could create thermal bridges detrimental to insulation. In addition, the adhesive tapes facilitate application of the rendering coating, by avoiding unevenness between insulation elements which could be visible later on through the mortar coating.

The insulation system of the invention advantageously combines an insulation element comprising glass wool, which provides improved thermal insulation and lightness, with an improved spacer fastening device, which permits straightforward, fast, efficient and spaced fixation of the insulation element to the structural element of a building.

### Method for fixation

In another aspect of the invention, a method for the spaced fixation of an insulation element, comprising glass wool, to a structural element of a building is disclosed. In this method, the structural element has a first (i.e. interior) and second (i.e. exterior) sides. The insulation element comprising glass wool is provided comprising a first and a second major surfaces. The insulation element is positioned with its first major surface proximal to the second side of the structural element.

The method further comprises providing a spacer fastening device comprising a) a hollow shank with first means for engagement with the insulation element, b) an elongated shaft received in the cavity of the hollow shank, and c) an adjusting element, wherein the adjusting element and the hollow shank are locked against relative movement in the axial direction of the elongated shaft, while being rotable relative to each other. The spacer fastening device is inserted in the insulation element, preferably with the elongated shaft first, until the first means for engagement are introduced into the insulation element. Simultaneously or subsequently, the elongated shaft is inserted into the structural element. The method of the invention is characterized in that the adjusting element of the spacer fastening device is then rotated, while the elongated shaft remains rotationally still, to adjust the distance between the second major surface of the insulation element and the second side of the structural element. In other words, the elongated shaft does not co-rotate with the adjusting element, the rotation movements of the elongated shaft and the adjusting element being uncoupled. Preferably, the hollow shank does also remain rotationally still when the adjusting element is rotated, and does not co-rotate with the adjusting element during the distance adjustment.

The insulation element comprising glass wool is preferably chosen from any of the embodiments of this insulation element described in relation to the insulation system.

In particularly preferred embodiments, the insulation element is provided comprising an internal and an external layer. In the method of these embodiments, the internal layer is positioned more proximal, and the external layer more distal, in relation to the structural element. Preferably, the external layer is more rigid than the internal layer.

In preferred embodiments of this method for fixation, the spacer fastening device is chosen from any of the embodiments for this spacer fastening device described in relation to the insulation system.

Suitably, after the insulation element comprising glass wool is positioned proximal to the structural element, a hole is created, e.g. by drilling, from the second major surface of the insulation element, through its thickness, and into the structural element.

The spacer fastening device is inserted into the insulation element, e.g. through the optional hole drilled in it, preferably with the elongated shaft first, until the first means for engagement are introduced into the insulation element. Preferably, the spacer fastening device is provided with an expanding dowel partially enclosing the elongated shaft, for fixation into the structural element. When the first means for engagement are introduced into the insulation element, the expanding dowel is preferably also simultaneously introduced into the hole drilled in the structural element. The expansion dowel preferably also encloses partially the hollow shank.

Preferably, the elongated shaft, suitably partially enclosed by the expanding dowel, is introduced into the structural element, or the hole optionally drilled in it, simultaneously with the introduction of the first engagement means of the hollow shank into the insulation element. Alternatively, the elongated shaft is subsequently introduced into the structural element, after the first engagement means have been introduced into the insulation element. By introducing the elongated shaft in the structural element, the fixation of the spacer fastening device to this element is achieved. This fixation is further reinforced by the expansion of the optional expanding dowel in the hole of the structural element, achieved when the elongated shaft is introduced in the expanding zone of the dowel.

In preferred embodiments, the first means for engagement with the insulation element comprise a helical thread running around and along at least part of the length of body of the hollow shank. In this case, the introduction of the first means for engagement into the insulation element is achieved by rotation of the hollow shank, wherein the helical thread is screwed into the insulation material. In these embodiments, the hollow shank preferably comprises a retaining plate configured to rest on the major surface of the insulation element most distal form the structural element, and the retaining plate comprises at least one opening or perforation through its thickness. A driving tool can be engaged with the at least one perforation or opening in the retaining disk in order to produce its rotation and consequently the introduction of the helical thread into the insulation element.

In preferred embodiments, the elongated shaft comprises a threaded region, which will be called second threaded region to maintain consistency with the disclosure related to the insulation system. This second threaded region is located at the end region of the shaft most distal from the hollow shank, and is intended to be inserted into the structural element, and in the optional expanding dowel. In this case, the elongated shaft preferably comprises a head at its end more distal from the structural element provided with fourth means for engagement with a screw driver. The elongated shaft can be inserted into the structural element by rotation, i.e. rotating a screw driver engaged in the head of the shaft.

The method of the invention comprises the features of claim 12 and is characterized in that, in order to adjust the distance between the second major surface of the insulation element and the second side of the structural element, the adjusting element of the spacer fastening device is rotated, while the elongated shaft remains rotationally still, or essentially still. Preferably, the hollow shank also remains rotationally still, or essentially still, during rotation of the adjusting element. In other words, the rotation of the adjusting element is decoupled from the rotation of the hollow shank and/or the rotation of the elongated shaft.

The method of the invention has the advantage that the elongated shaft does not need to be screwed in or out for adjustment of the distance between the second major surface of the insulation element and the second side of the structural element, avoiding that the elongated shaft eventually remains insufficiently inserted into the structural element, or that the length of the elongated shaft has to be over-sized to assure that there is always enough shaft inserted to achieve sufficient fixation strength. Additionally, since the hollow shank is preferably also not rotated, the anchoring of the insulation element to the spacer fastening device is not affected during the distance adjustment step.

In preferred embodiments of the method of the invention, the spacer fastening device is configured so that the adjusting element has second means for engagement with a first threaded portion of the elongated shaft. These second means for engagement are designed to allow the rotation of the adjusting element relative to and co-axial with the axial direction of the shaft. The rotation produces the movement of the adjusting element relative to the elongated shaft along its axial direction. In other words, the second means for engagement preferably allow a helical or screw-like movement of the adjusting element around to the shaft. The second means for engagement preferably further hinder the movement of the adjusting element relative to the elongated shaft along its axial direction, when the adjusting element is not rotated. In certain embodiments, the second means for engagement of the adjusting element might comprise a third threaded region which is configured to be complementary with the first threaded region of the shaft. In this case, rotation of the adjusting element, while the elongated shaft remains still, results in a stepless or continuous movement of the adjusting element along the first threaded region of the elongated shaft in a direction which depends on the direction of the rotation. This displacement is exploited by the invention for advantageous and straightforward adjustment of the distance between the second major surface of the insulation element and the second side of the structural element.

In preferred embodiments, the adjusting element and the hollow shank are designed so that they can be locked together against relative movement in the axial direction of the shaft, when installed, while still being freely rotatable relative to each other. Once the adjusting element and the hollow shank are locked against axial movement, the rotation of the adjustment device, while the elongated shaft remains rotationally still, results in the movement in the axial direction of the elongated shaft of both the adjusting element and the hollow shank. Since the first means for engagement of the hollow shank are introduced in the insulation element, effectively anchoring the shank to the insulation material, the simultaneous movement of adjusting element and hollow shank results in the desired adjustment of the distance between the second major surface of the insulation element and the second side of the structural element. In preferred embodiments of the method of the invention, the hollow shank also remains rotationally still while the adjusting element is rotated for distance adjustment, so that the insulation element stays efficiently anchored to the hollow shank during distance adjustment.

According to an embodiment, the adjusting element has, at is outside, at least one circumferentially running groove or notch which engages with at least one projecting element of the hollow shank which is formed at the inside of the cavity. Alternatively, the wall of the cavity of the hollow shank is provided with a circumferentially running notch or groove and the adjusting element has at least one projecting element projecting from its outside for engagement with the notch or groove. According to an embodiment, the projecting element or elements can be resilient allowing an insertion of the adjusting element into the cavity until the projecting elements snaps back into the corresponding notch or groove. Once snapped in, the engagement between the projecting element and the groove or notch prevents the adjusting element from further movement along the axial direction, while still allowing rotation of the adjusting element and the hollow shank relative to each other.

For assembly, the adjusting element can be, according to an embodiment, inserted (e.g. by axial movement) first into the hollow shank followed by the insertion (e.g. by rotation) of the elongated shaft into the adjusting element. Alternatively, a pre-assembled unit of adjusting element and elongated screw can be inserted into the hollow shank unto the further axial advancement is locked by cooperation between the projecting element and the notch or groove.

Since the spacer fastening device allows to set a defined distance of the insulation surface most distal to the structural element to the second side of the structural element, insulation materials with relatively lower compression resistance, such as those comprising glass wool, can be used. Also, the straightforward adjustment of this distance can be used to adjust the planarity among the distal surfaces of several insulation elements located onto the same structural element, without the need of a binding agent to bond the insulation elements to the structural element. The adjustment of the distance can be used to regulate the level of compression applied to the installed insulation elements, to assure a more intimate contact between the structural element and the insulation element, and to achieve better adaptation of the insulation element to irregularities in the second side of the structural element.

### Definitions

Glass wool is a material formed by an intricate network of glass fibers which might be bonded in their cross-over points by different means, e.g. by using a cured binder. Processes for the production of glass wool products are well known in the art, and usually comprise the steps of melting the mineral material to an adequate temperature, fiberizing the molten mixture into fine fibers, application (e.g. spraying) of a binder composition to the individual fibers, collection of the fibers and formation of a primary fleece on a foraminous conveyor, densifying the fleece, and curing the binder at elevated temperatures. The cured mat is then cut to the desired size with transverse and edge trimmers and optionally rolled up, before it is packaged for transport. It should be understood that although glass wool comprises both glass fibers and binder, the main component of the glass wool are the fibers, being the binder in a much lower amount, usually in a content of less than 30 wt.-% relative to weight of the fibers. The term glass wool according to this invention preferably does not cover fibrous materials typically used for facings, coverings, backings, support and/or filtration materials, but not intended as insulation materials, such as non-woven, woven, meshes, scrims, or continuous filament mat products, characterized by being manufactured of glass fibers, but which are usually prepared by weaving, cross-laying, wet-laying, dry-laying or spun-laying methods, and where the binder is applied to the preformed substrate, and not to the loose individual fibers as in the case of glass wool.

The artisan in the thermal and acoustic insulation field readily identifies the characteristics making a mineral fiber composition a glass fiber composition, and differentiates a glass from other minerals. As a simple practical distinguishing feature, the term glass fibers means that the mineral composition of the fibers is characterized by having a weight ratio of compounds having alkali metals (i.e. K₂O, Na₂O) relative to compounds having alkaline earth metals (i.e. MgO, CaO) higher than 1. In comparison, stone wool or slag wool fibers have a weight ratio of compounds having alkali metals to compounds having alkaline earth metals of less than 1. Glass wool is a mineral wool material where the fibers have a glass composition.

By laminar glass wool, or glass wool with a laminar orientation of the fibers, it is meant that the fibers forming the glass wool are predominantly oriented parallel to the major surfaces of the mat as produced in the manufacturing line. These major surfaces normally correspond to the major surfaces of the elements, such as panels, cut from the mat. From a different perspective, the fibers are predominantly oriented in a plane perpendicular to the thickness of the mat or the panels formed therefrom. The laminar configuration of the fibers results from the deposition of the fibers freshly formed by a series of fiberizers and attenuated by air streams from burners vertically onto a receiving foraminous conveyor, under air suction from beyond the conveyor. Optionally, the laminar configuration of the fibers, this is, the predominant orientation parallel to the major surfaces, can be further improved by compressing the mat in the thickness direction and/or by stretching the uncured mat, and then curing the binder. The stretching of the mat can be achieved for example by running the conveyors at sequentially increased speeds downstream the manufacturing line, before the mat is cured. In the laminar mineral wool material, the fibers shall have not been subjected to any process to increase their orientation in the direction perpendicular to the major surfaces of the mat, such as lamella formation or crimping processes.

The density of the glass wool insulation material refers to the material as such, including the fiber network and any binder, additive, etc. it might have. The density is meant in the uncompressed and unpacked state. The artisan knows how to determine the density of glass wool insulating materials. Reference is made to the standard method UNE EN 823:2013 for measuring the thickness of thermal insulating products, from which density can be calculated from the length and width dimensions, and the weight of a fibrous material sample.

The binder content of the glass wool is defined as the "Loss on Ignition" (LOI), measured according ISO 29771:2008.

Rigidity is meant as the stiffness of the material or its resistance to deformation under load. Relevant for the invention is the resistance of the concerned layer to bending under load. A layer is more rigid than other if it bends less under the same load.

The major diameter of the helical thread should be understood as the cylinder distance between two diametrically opposed thread crests, this is the distance between two opposed crests measured in projection onto a plane perpendicular to the central axis of the thread. For a helical thread in the shape of a cone, the maximum major diameter corresponds to the larger of such distances.

The external diameter of the body of the hollow shank should be understood as the distance between two diametrically opposing points on the outside surface of the body of the hollow shank, and measured in a plane perpendicular to the central longitudinal axis of the hollow shank. When the body of the hollow shank is configured with a conical shape, the maximum external diameter of the body of the shank is the largest of such distances.

### Brief description of the drawings

Figure 1 represents a schematic perspective view of an insulation system according to a preferred embodiment of the invention.
Figure 2 represents a schematic lateral cut-through view of an insulation system for a wall according to a preferred embodiment of the invention.
Figure 3 represent a schematic lateral cut-through view of the preferred embodiment of Figure 2, after distance adjustment.
Figure 4 represents a schematic perspective view of a spacer fastening device, without the elongated shaft, of a certain embodiments of the invention.
Figure 5a and Figure 5b represent a perspective and a cut-through view respectively of an adjusting element of a spacer fastening device according to preferred embodiments of the invention.

### Detailed description of the embodiments in the drawings

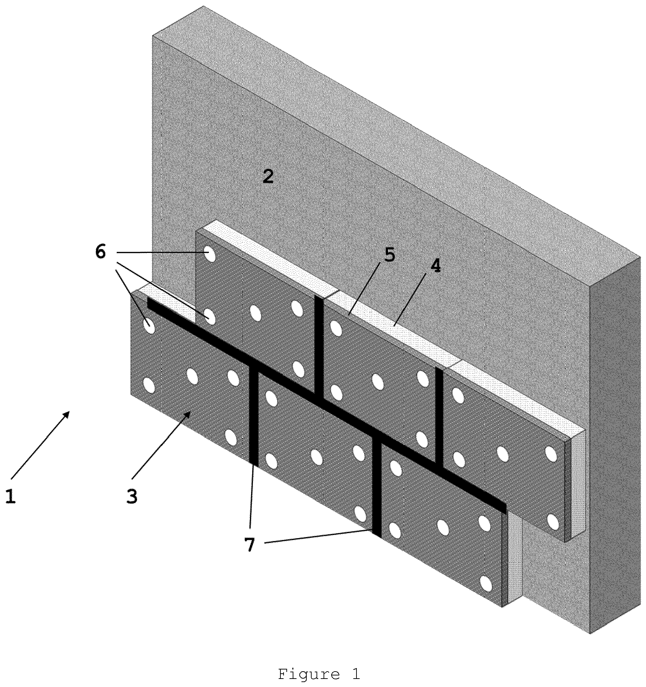

Figures 1-5 show some most preferred embodiments of the invention. These figures are intended to help understand the invention, they shall, however, not be interpreted as limiting it.

Figure 1 shows an insulation system **1** applied externally to a structural element **2** of a building, in this case, a wall structure, according to preferred embodiments, with the structural element **2** covered externally by a plurality (in this case 6 are visible) of insulation elements **3** in form of rectangular panels arranged side-by-side. Each insulation element **3** comprise glass wool. Each insulation element **3** is fixed to the structural element **2** by a plurality of spacer fastening devices **6** (in this case by 5). In the embodiment shown in this Figure 1, each insulation element **3** comprises internal **4** and external **5** layers.

The insulated wall system according to the embodiment in Figure 1 further comprises adhesive tapes **7** applied bridging the abutting edges of the neighboring insulation elements **3.** The adhesive tapes **7** are adhered to the surfaces of the insulation elements most distal from the structural element **2,** to the edge areas of the neighboring insulation elements **3.**

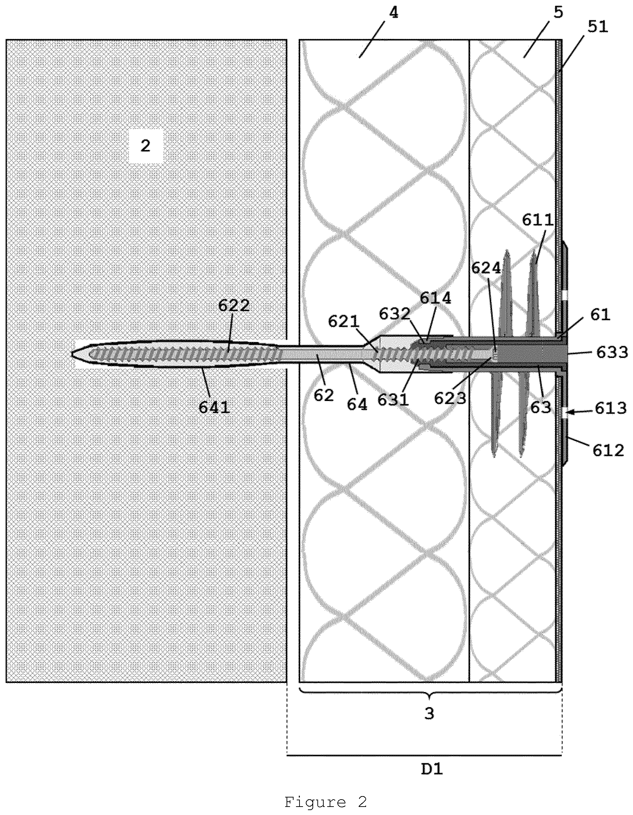

An embodiment of the insulation system **1** applied externally to a structural element **2** is seen with more detail in cut-through view in Figure 2. The spacer fastening device **6** extends through the insulation element **3,** comprising internal **4** and external layers **5,** and into the structural element **2.** The external layer **5** in preferred embodiments is more rigid than the internal layer **4,** and comprises > 95 wt.-% laminar glass wool with a density of about 80 kg/m³. The external layer **5** comprises a reinforcing web **51** of a knitted glass fiber fabric bonded to a glass fiber veil. The internal layer **4** in this embodiment comprises > 95 wt.-% of laminar glass wool with a density of about 30 kg/m³.

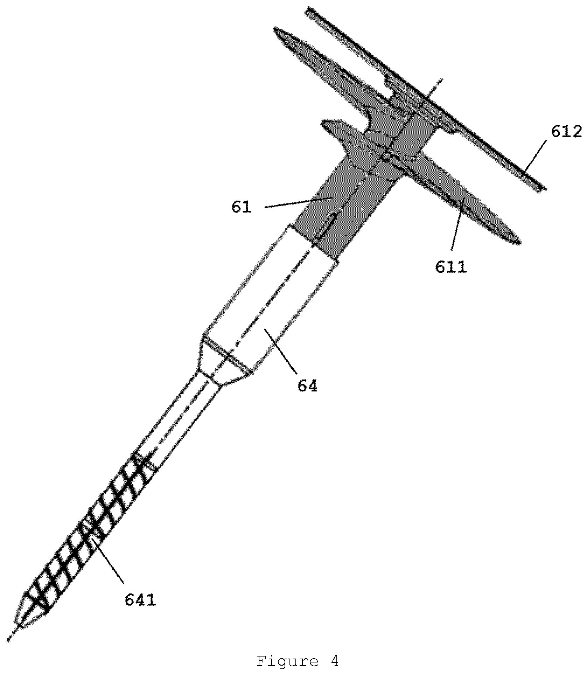

As visible in Figure 2 and also in Figure 4, the spacer fastening device **6** comprises a hollow shank **61** with a cylindrical body of 15 mm external diameter. The hollow shank **61** comprises a retaining plate **612** shaped as a disk, including a plurality of perforations **613.** The outer diameter of the retaining disk **612** is 90 mm. The hollow shank **61** further comprises first means for engagement **611** with the insulation element **3** formed as a helical thread running around and along part of the cylindrical body of the hollow shank **61.** The major diameter of the helical thread is also 90 mm. The helical thread **611** is preferably inserted into the external layer **5,** and anchors effectively the insulation element **3** to the structural element **2.** An elongated shaft **62** embodied by an elongated screw is received in the cavity of the hollow shank **61.** The elongated screw **62** comprises a first threaded region **631** and a second threaded region **622,** and is provided with a screw head **623** with fourth means for engagement **624** with a screw driving tool in the form of a polygonal socket. An expanding dowel **64** is provided enclosing partially the elongated screw **62,** and also partially enclosing or surrounding the body of the hollow shank **61.** The second threaded region **622** of the elongated screw **62** expands the expanding zone **641** of the dowel **64** inserted into a hole drilled into the structural element **2** and secures the spacer fastening device **6** against pulling forces.

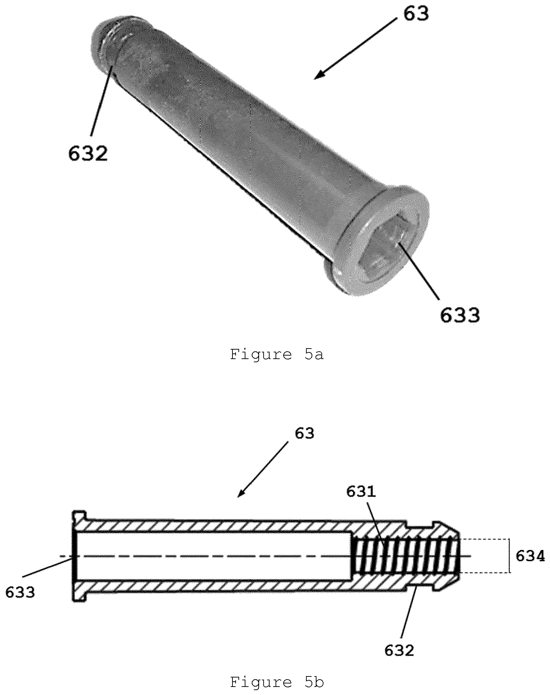

The spacer fastening device **6** further comprises an adjusting element **63** received in the cavity of the hollow shank **61.** The adjusting element **63** according to a preferred embodiment is also shown in Figure 5a and Figure 5b in a perspective and a cut-through view respectively. The adjusting element **63** is provided with a hollow cylindrical shape fitting to the shape of the cavity of the hollow shank **61.** The adjusting element defines a cavity with a certain diameter, where the head **623** of the elongated screw **62** is received. In this embodiment, this cavity comprises a narrowing **634** with a diameter smaller than the cavity. The adjusting element **63** is provided with a polygonal socket **633** at its end more distal from the structural element **2** for engagement and rotation with a driving tool (not shown).

The adjusting element **63** and the hollow shank **61** are locked against relative movement in the axial direction of the elongated screw **62.** For this, the hollow shank **61** is provided with a ring-shaped bulge **614** which is received in a complementary ring-shaped recess **632** formed in the adjusting element **63.** This locking mechanism hinders relative movement in the axial direction of the screw, while not restricting the rotation of the adjusting element **63** relative to the hollow shank **61.**

The adjusting element **3** is further provided with second means for engagement **631** with the first threaded region **621** of the elongated screw **62.** These second means for engagement **631** are embodied by a third threaded region **631** provided in the wall of the narrowing **634** of the adjusting element **63,** which is complementary with the first threaded region **621** of the screw **62.** When the third threaded region **631** in the adjusting element and the first threaded region **621** of the screw **62** are engaged, the adjusting element **63** is locked against relative movement in the axial direction of the screw **62,** and since the adjusting element **63** and the hollow shank **61** are also axially locked, effectively, also the hollow shank **62** anchored in the insulation element **3** is locked in the axial direction of the screw **62,** resulting in the spaced fixation of the insulation element **3** to the structural element **2.** Nevertheless, the engagement of the two threads **621, 631** does not hinder that the adjusting element **63** can be rotated around the elongated screw **62.** This rotation produces a helical movement of the adjusting element **63** around and along the elongated screw **62,** in a direction that depends on the direction of the rotation.

In Figure 2, the surface of the insulation element **3** more distal from the structural element **2** is fixed at a distance **D1** from the second (outer) side of this structural element **2.**

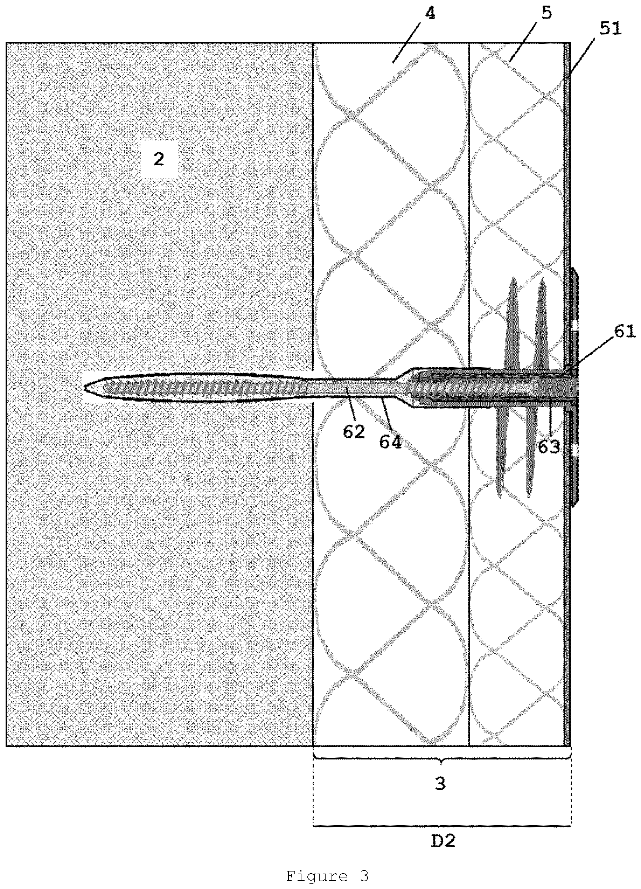

An embodiment of the method for the fixation of an insulation element **3** to a structural element **2** can be described in reference to Figure 2 and Figure 3. In it, the insulation element **3** comprising glass wool is located with its internal layer **4** proximal to the second (outer) side of the structural element **2.** A hole is drilled from the surface of the insulation element **3** more distal from the structural element **2,** through the insulation element **3,** and into the structural element **2.** The spacer fastening device **6** is then inserted into the drilled hole with the elongated screw **62** and the expanding dowel **64** first. The helical thread **611** of the hollow shank **61** is screwed by rotation into the external layer **5** of the insulation element **3,** until the retaining disk **612** rests on the surface of the insulation element **3.** For this, a screw driving tool (not shown) can be engaged in the perforations **613** provided in the retaining disk **612.** The expanding region **641** of the dowel **64** has preferably also been inserted at this stage into the hole in the structural element **2.**

Simultaneously or subsequently, the elongated screw **62** is inserted with a screwing movement into the expanding zone **641** of the dowel **64** and into the structural element **2.** This can be achieved by engaging a screw driving tool (not shown) with a polygonal socket **624** in the head **623** of the elongated screw **62.** By this, the insulation element **3** is fixed to the structural element **2,** wherein the distance from the surface of the insulation element **3** more distal to the structural element **2,** to the second (outer) side of the structural element **2** is set to **D1.** As can be appreciated in Figure 2, this distance **D1** might be larger than the thickness of the insulation element **3,** leaving a free space between the structural element **2** and the insulation element **3.**

Figure 3 shows the embodiment of Figure 2 discussed so far, wherein the distance of the surface of the insulation element **3** more distal from the structural element **2,** and the second (outer) side of the structural element **2** has been adjusted or modified to **D2,** being **D2** smaller than **D1** (some references to elements in Figure 2 identical in Figure 3 are removed for clarity purposes). This reduction of the distance to **D2** eliminated the free space between the structural element **2** and the insulation element **3,** and compressed slightly the internal layer **4** of the insulation element **3.**

In order to obtain the distance adjustment from **D1** to **D2,** the adjusting element **63** is rotated to produce its advancement towards the structural element **2** along the threaded region **621** of the elongated screw **62,** while the elongated screw **62** and the hollow shank **61** both remain rotationally still, i.e. they do not co-rotate. To produce the rotation of the adjusting element **63,** a rotating driving tool (not shown) is engaged with the socket **633** provided in the adjusting element **63.** Obviously, the distance can also easily be adjusted to a value larger than **D1,** just by rotating the adjusting element **63** in the opposite direction and thus, advancing the adjusting element **63** away from the structural element **2.**

## Claims

1. An insulation system (1) for a structural element (2) of a building, comprising:
i) an insulation element (3) comprising glass wool; and
ii) a spacer fastening device (6) for fastening the insulation element (3) to the structural element (2), the spacer fastening device (6) comprising:
a) a hollow shank (61) with first means for engagement (611) with the insulation element (3), the hollow shank (61) comprising a cavity; and
b) an elongated shaft (62) received in the cavity of the hollow shank (61) and comprising a first threaded region (621);
c) an adjusting element (63) having second means for engagement (631) with the first threaded region (621) of the elongated shaft (62);
wherein the adjusting element (63) and the hollow shank (61) are in use locked against relative movement in the axial direction of the elongated shaft (62);
**characterized in that** the second means for engagement (631) allow in use rotation of the adjusting element (63) around the elongated shaft (62) to produce a movement of the adjusting element (63) relative to the elongated shaft (62) along its axial direction; and **in that** the adjusting element (63) and the hollow shank (61) are in use also rotatable relative to each other.

2. An insulation system according to claim 1, wherein a second threaded region (622) on the elongated shaft at an end most distal from the hollow shank is provided, to be inserted into the structural element, and the second means for engagement (631) of the adjusting element (63) with the first threaded portion (621) of the elongated shaft (62) comprise a third threaded region (631) complementary with the first threaded region (621).

3. An insulation system according to any of the previous claims, wherein the adjusting element (63) comprises third means for engagement (633) with a driving tool.

4. An insulation system according to any of the previous claims, wherein the adjusting element (63) is received in the cavity of the hollow shank (61).

5. An insulation system according to any of the previous claims, wherein the first means for engagement (611) with the insulation element (3) comprise a helical thread.

6. An insulation system according to any of the previous claims, wherein the spacer fastening device (6) further comprises an expanding dowel (64) enclosing part of the hollow shank (61).

7. An insulation system according to any of the previous claims, wherein the insulation element (3) comprises internal (4) and external (5) layers, the external layer (5) being more rigid than the internal layer (4).

8. An insulation system according to claim 7, wherein the external layer (5) comprises at least 90 wt.-% glass wool, preferably laminar glass wool, and has a density of less than 140 kg/m³, and preferably equal to or higher than 60 kg/m³.

9. An insulation system according to any of the previous claims, wherein the glass wool has a laminar orientation of the glass fibers.

10. An insulation system according to any of the previous claims, wherein the insulation element (3) comprises a reinforcing web (51) on or at its major surface more proximal and/or distal from the structural element (2).

11. An insulation system according to any of the previous claims, wherein the insulation element does not comprise any layer with a fibrous insulating material with a density equal or higher than 140 kg/m³.

12. A method for the spaced fixation of an insulation system according to claim 1, comprising an insulation element (3) comprising glass wool, and a spacer fastening device (6) for fastening the insulation element (3) to a structural element (2) of a building having a first and second sides, comprising:
- providing the insulation element (3) comprising glass wool and a first and a second major surfaces;
- positioning the insulation element (3) with its first major surface proximal to the second side of the structural element (2);
- providing the spacer fastening device (6) comprising
a) a hollow shank (61) with first means for engagement (611) with the insulation element (3), the hollow shank (61) comprising a cavity;
b) an elongated shaft (62) received in the cavity of the hollow shank (61), and
c) an adjusting element (63), wherein the adjusting element (63) and the hollow shank (61) are locked against relative movement in the axial direction of the elongated shaft (62), while being rotatable relative to each other;
- inserting the spacer fastening device (6) into the insulation element (3), until the first means for engagement (611) are introduced into the insulation element (3),
- inserting the elongated shaft (62) into the structural element (2),
wherein
- subsequently the adjusting element (63) of the spacer fastening device (6) is rotated, while the elongated shaft (62) remains rotationally still, to adjust the distance (D1, D2) between the second major surface of the insulation element (3) and the second side of the structural element (2).

13. The method according to claim 12, wherein the hollow shank (61) also remains rotationally still when the adjusting element (63) is rotated.

14. The method according to any of the claims 12-13, wherein the first means for engagement (611) comprise a helical thread (611) and it is introduced into the insulation element (3) by rotation.

15. The method according to any of the claims 12-14, wherein the elongated shaft (62) is provided with a first threaded region (621); and a second threaded region (622) on its end most distal from the hollow shank to be inserted into the structural element; and the adjusting element (63) is provided with third threaded region (631) for engagement with this first threaded region (621) and complementary to it, so that rotation of the adjusting element (63), while the elongated shaft (62) remains still, results in a stepless movement of the adjusting element (63) along the elongated shaft (62).

## Patentansprüche

1. Dämmsystem (1) für ein strukturelles Element (2) eines Gebäudes, aufweisend:
i) ein Dämmelement (3), das Glaswolle aufweist; und
ii) eine Abstandshalter-Befestigungsvorrichtung (6) zur Befestigung des Dämmelements (3) an dem strukturellen Element (2), wobei die Abstandshalter-Befestigungsvorrichtung (6) aufweist:
a) einen hohlen Stiel (61) mit ersten Mitteln (611) für einen Eingriff mit dem Dämmelement (3), wobei der hohle Stiel (61) einen Hohlraum aufweist; und
b) einen länglichen Schaft (62), der in dem Hohlraum des hohlen Stiels (61) aufgenommen ist und eine erste Gewindezone (621) aufweist;
c) ein Einstellelement (63) mit zweiten Mitteln (631) für einen Eingriff mit der ersten Gewindezone (621) des länglichen Schafts (62) ;
wobei das Einstellelement (63) und der hohle Stiel (61) im Gebrauch gegen eine relative Bewegung in der axialen Richtung des länglichen Schafts (62) verriegelt sind;
**dadurch gekennzeichnet, dass** die zweiten Mittel (631) für einen Eingriff im Gebrauch eine Drehung des Einstellelements (63) um den länglichen Schaft (62) gestatten, um eine Bewegung des Einstellelements (63) relativ zu dem länglichen Schaft (62) entlang seiner axialen Richtung zu erzeugen;
und dadurch, dass das Einstellelement (63) und der hohle Stiel (61) im Gebrauch auch relativ zueinander drehbar sind.

2. Dämmsystem nach Anspruch 1, wobei eine zweite Gewindezone (622) an dem länglichen Schaft an einem Ende am meisten distal von dem hohlen Stiel bereitgestellt ist, um in das strukturelle Element eingesetzt zu werden, und die zweiten Mittel (631) für einen Eingriff des Einstellelements (63) mit dem ersten Gewindeabschnitt (621) des länglichen Schafts (62) eine dritte Gewindezone (631) komplementär mit der ersten Gewindezone (621) aufweisen.

3. Dämmsystem nach einem der vorhergehenden Ansprüche, wobei das Einstellelement (63) dritte Mittel (633) für einen Eingriff mit einem Eintreibwerkzeug aufweist.

4. Dämmsystem nach einem der vorhergehenden Ansprüche, wobei das Einstellelement (63) in dem Hohlraum des hohlen Stiels (61) aufgenommen ist.

5. Dämmsystem nach einem der vorhergehenden Ansprüche, wobei die ersten Mittel (611) für einen Eingriff mit dem Dämmelement (3) ein Helixgewinde aufweisen.

6. Dämmsystem nach einem der vorhergehenden Ansprüche, wobei die Abstandshalter-Befestigungsvorrichtung (6) ferner einen Spreizdübel (64) aufweist, der einen Teil des hohlen Stiels (61) umschließt.

7. Dämmsystem nach einem der vorhergehenden Ansprüche, wobei das Dämmelement (3) eine innere (4) und äußere (5) Schicht aufweist, wobei die äußere Schicht (5) steifer ist als die innere Schicht (4).

8. Dämmsystem nach Anspruch 7, wobei die äußere Schicht (5) mindestens 90 Gew.-% Glaswolle aufweist, vorzugsweise laminare Glaswolle, und eine Dichte von weniger als 140 kg/m³ aufweist, vorzugsweise größer oder gleich 60 kg/m³.

9. Dämmsystem nach einem der vorhergehenden Ansprüche, wobei die Glaswolle eine laminare Orientierung der Glasfasern aufweist.

10. Dämmsystem nach einem der vorhergehenden Ansprüche, wobei das Dämmelement (3) ein Verstärkungsgewebe (51) auf oder an seiner Hauptfläche mehr proximal und/oder distal von dem strukturellen Element (2) aufweist.

11. Dämmsystem nach einem der vorhergehenden Ansprüche, wobei das Dämmelement keine Schicht mit einem Faserdämmmaterial mit einer Dichte größer oder gleich 140 kg/m³ aufweist.

12. Verfahren zur beabstandeten Befestigung eines Dämmsystems nach Anspruch 1, aufweisend ein Dämmelement (3), das Glaswolle aufweist, und eine Abstandshalter-Befestigungsvorrichtung (6) zur Befestigung des Dämmelements (3) an einem strukturellen Element (2) eines Gebäudes mit einer ersten und zweiten Seite, aufweisend:
- Bereitstellen des Dämmelements (3), das Glaswolle und eine erste und zweite Hauptfläche aufweist;
- Positionieren des Dämmelements (3) mit seiner ersten Hauptfläche proximal zu der zweiten Seite des strukturellen Elements (2);
- Bereitstellen der Abstandshalter-Befestigungsvorrichtung (6), aufweisend:
a) einen hohlen Stiel (61) mit ersten Mitteln (611) für einen Eingriff mit dem Dämmelement (3), wobei der hohle Stiel (61) einen Hohlraum aufweist;
b) einen länglichen Schaft (62), der in dem Hohlraum des hohlen Stiels (61) aufgenommen ist; und
c) ein Einstellelement (63), wobei das Einstellelement (63) und der hohle Stiel (61) gegen eine relative Bewegung in der axialen Richtung des länglichen Schafts (62) verriegelt sind, während sie relativ zueinander drehbar sind;
- Einsetzen der Abstandshalter-Befestigungsvorrichtung (6) in das Dämmelement (3), bis die ersten Mittel (611) für einen Eingriff in das Dämmelement (3) eingeführt werden;
- Einsetzen des länglichen Schafts (62) in das strukturelle Element (2);
wobei
- anschließend das Einstellelement (63) der Abstandshalter-Befestigungsvorrichtung (6) gedreht wird, während der längliche Schaft (62) rotationsmäßig unbewegt bleibt, um die Distanz (D1, D2) zwischen der zweiten Hauptfläche des Dämmelements (3) und der zweiten Seite des strukturellen Elements (2) einzustellen.

13. Verfahren nach Anspruch 12, wobei der hohle Stiel (61) auch rotationsmäßig unbewegt bleibt, wenn das Einstellelement (63) gedreht wird.

14. Verfahren nach einem der Ansprüche 12 bis 13, wobei die ersten Mittel (611) für einen Eingriff ein Helixgewinde (611) aufweisen, und es in das Dämmelement (3) durch Drehen eingeführt wird.

15. Verfahren nach einem der Ansprüche 12 bis 14, wobei der längliche Schaft (62) mit einer ersten Gewindezone (621) versehen ist; und einer zweiten Gewindezone (622) an seinem Ende am meisten distal von dem hohlen Stiel, um in das strukturelle Element eingesetzt zu werden; und das Einstellelement (63) mit einer dritten Gewindezone (631) für einen Eingriff mit dieser ersten Gewindezone (621) und komplementär dazu versehen ist, so dass eine Drehung des Einstellelements (63), während der längliche Schaft (62) unbewegt bleibt, zu einer stufenlosen Bewegung des Einstellelements (63) entlang des länglichen Schafts (62) führt.

## Revendications

1. Système d'isolation (1) pour un élément de construction (2) d'un bâtiment, comprenant:
i) un élément d'isolation (3) comprenant de la laine de verre; et
ii) un dispositif de fixation d'entretoise (6) pour fixer l'élément d'isolation (3) à l'élément de construction (2), le dispositif de fixation d'entretoise (6) comprenant:
(a) une tige creuse (61) comportant des premiers moyens d'engagement (611) avec l'élément d'isolation (3), la tige creuse (61) comprenant une cavité; et
(b) un arbre allongé (62) reçu dans la cavité de la tige creuse (61) et comprenant une première région filetée (621);
(c) un élément de réglage (63) ayant des deuxièmes moyens d'engagement (631) avec la première région filetée (621) de l'arbre allongé (62); dans lequel l'élément de réglage (63) et la tige creuse (61) sont, lors de l'utilisation, bloqués contre tout mouvement relatif dans la direction axiale de l'arbre allongé (62) ;
**caractérisé en ce que** les deuxièmes moyens d'engagement (631) permettent, lors de l'utilisation, la rotation de l'élément de réglage (63) autour de l'arbre allongé (62) pour produire un mouvement de l'élément de réglage (63) par rapport à l'arbre allongé (62) dans sa direction axiale; et **en ce que** l'élément de réglage (63) et la tige creuse (61) sont, lors de l'utilisation, également rotatifs l'un par rapport à l'autre.

2. Système d'isolation selon la revendication 1, dans lequel une deuxième région (622) sur l'arbre allongé à une extrémité la plus distale de la tige creuse est prévue, pour être insérée dans l'élément de construction, et les deuxièmes moyens d'engagement (631) de l'élément de réglage (63) avec la première partie filetée (621) de l'arbre allongé (62) comprennent une troisième région filetée (631) complémentaire de la première région filetée (621) .

3. Système d'isolation selon l'une quelconque des revendications précédentes, dans lequel l'élément de réglage (63) comprend des troisièmes moyens d'engagement (633) avec un outil d'entraînement.

4. Système d'isolation selon l'une quelconque des revendications précédentes, dans lequel l'élément de réglage (63) est reçu dans la cavité de la tige creuse (61) .

5. Système d'isolation selon l'une quelconque des revendications précédentes, dans lequel les premiers moyens d'engagement (611) avec l'élément d'isolation (3) comprennent un filetage hélicoïdal.

6. Système d'isolation selon l'une quelconque des revendications précédentes, dans lequel le dispositif de fixation d'entretoise (6) comprend en outre une cheville à expansion (64) enfermant une partie de la tige creuse (61) .

7. Système d'isolation selon l'une quelconque des revendications précédentes, dans lequel l'élément d'isolation (3) comprend des couches interne (4) et externe (5), la couche externe (5) étant plus rigide que la couche interne (4).

8. Système d'isolation selon la revendication 7, dans lequel la couche externe (5) comprend au moins 90 % en poids de laine de verre, de préférence de la laine de verre laminaire, et a une densité inférieure à 140 kg/m³, et de préférence égale ou supérieure à 60 kg/m³.

9. Système d'isolation selon l'une quelconque des revendications précédentes, dans lequel la laine de verre a une orientation laminaire des fibres de verre.

10. Système d'isolation selon l'une quelconque des revendications précédentes, dans lequel l'élément d'isolation (3) comprend une nervure de renfort (51) sur ou à sa surface principale la plus proche et/ou la plus éloignée de l'élément structurel (2).

11. Système d'isolation selon l'une quelconque des revendications précédentes, dans lequel l'élément d'isolation ne comprend aucune couche avec un matériau d'isolation fibreux avec une densité supérieure ou égale à 140 kg/m³.

12. Méthode pour la fixation espacée d'un système d'isolation selon la revendication 1, comportant un élément d'isolation (3) comprenant de la laine de verre, et un dispositif de fixation d'entretoise (6) pour fixer l'élément d'isolation (3) à un élément de construction (2) d'un bâtiment ayant un premier et un deuxième côtés, comprenant:
- la fourniture de l'élément d'isolation comportant de la laine de verre et une première et une deuxième surfaces principales;
- le positionnement de l'élément d'isolation (3) avec sa première surface principale proximale par rapport au deuxième côté de l'élément de construction (2);
- la fourniture du dispositif de fixation d'entretoise (6) comportant
a) une tige creuse (61) comportant des premiers moyens d'engagement (611) avec l'élément d'isolation (3), la tige creuse (61) comprenant une cavité;
b) un arbre allongé (62) reçu dans la cavité de la tige creuse (61); et
c) un élément de réglage (63), l'élément de réglage (63) et la tige creuse (61) étant bloqués contre tout mouvement relatif dans la direction axiale de l'arbre allongé (62) tout en étant mobiles en rotation l'un par rapport à l'autre;
- l'insertion du dispositif de fixation d'entretoise (6) dans l'élément d'isolation (3) jusqu'à ce que les premiers moyens d'engagement (611) soient introduit dans l'élément d'isolation (3),
- l'insertion de l'arbre allongé (62) dans l'élément de construction (2),
dans lequel
- ensuite, l'élément de réglage (63) du dispositif de fixation d'entretoise (6) tourne, tandis que l'arbre allongé (62) reste immobile en rotation, pour régler la distance (D1, D2) entre la deuxième surface principale de l'élément d'isolation (3) et le deuxième côté de l'élément de construction (2).

13. Procédé selon la revendication 12, dans lequel la tige creuse (61) reste également immobile en rotation lorsque l'élément de réglage (63) tourne.

14. Procédé selon l'une quelconque des revendications 12-13, dans lequel les premiers moyens d'engagement (611) comprennent un filetage hélicoïdal (611) et sont introduits dans l'élément d'isolation (3) par rotation.

15. Procédé selon l'une quelconque des revendications 12-14, dans lequel l'arbre allongé (62) est pourvu d'une première région filetée (621); et d'une deuxième région filetée (622) sur son extrémité la plus distale par rapport à la tige creuse devant être insérée dans l'élément de construction; et l'élément de réglage (63) est pourvu d'une troisième région filetée (631) pour s'engager avec cette première zone filetée (621) et complémentaire à celle-ci, de sorte que la rotation de l'élément de réglage (63), alors que l'arbre allongé (62) reste immobile, entraîne un mouvement continu de l'élément de réglage (63) le long de l'arbre allongé (62).
